# FASCICULE DE BREVET EUROPEEN

(11) **EP 1 676 609 B1**
(45) Date de publication et mention de la délivrance du brevet: **06.07.2011**
(21) Numéro de dépôt: 04405805.5
(22) Date de dépôt: 28.12.2004
(51) Int. Cl.: A63G 21/04, A63G 7/00

(54) **Frein hydrodynamique, véhicule et installation de roller coaster**
Achterbahn Einrichtung, Fahrzeug und eine hydrodynamische Bremse dafür
Roller Coaster installation, vehicle and a hydrodynamic brake therefor

(43) Date de publication de la demande: 05.07.2006
(73) Titulaire: BOLLIGER & MABILLARD, INGENIEURS CONSEILS S.A., CH-1870 Monthey (CH)
(72) Inventeur: Bolliger, Walter, 1867 Antagnes (CH)
(74) Mandataire: Ganguillet, Cyril

(56) Documents cités:
- EP-A- 1 524 016
- US-A- 3 003 430
- US-A- 3 114 333
- US-A- 3 167 024
- US-A- 5 613 443
- US-B1- 6 170 403

## Description

La présente invention concerne un frein hydrodynamique pour un véhicule d'une installation de roller coaster, un véhicule équipé d'un tel frein et une installation de roller coaster comportant un tel véhicule. Elle concerne en particulier une installation de roller coaster comprenant une voie de guidage, au moins un véhicule guidé par la voie de guidage et au moins une pièce d'eau agencée sous ou à côté d'une portion de la voie de guidage, ledit véhicule étant muni d'au moins un frein hydrodynamique.

Une des attractions les plus spectaculaires et les plus impressionnantes d'un parc d'attractions est celle connue sous le nom de "montagnes russes" ou "roller coaster". Ces roller coasters comprennent un ou plusieurs véhicules constituant un train, circulant sur les rails d'une voie de guidage, avec des portions de circuit de pentes variées. Les passagers apprécient cette attraction pour les fortes impressions qu'elle procure. Ces impressions résultent dans une large mesure des diverses sensations d'accélération que procure le parcours; elles résultent également d'impressions subjectives, à savoir des sentiments de vertige, de peur, d'illusion du risque ou de surprise face à l'apparition de phénomènes inattendus, que le constructeur essaie de générer par l'agencement de l'installation.

Le brevet US 5,613,433 décrit une attraction dans laquelle un véhicule à roues circulant à l'intérieur d'une voie d'eau est configuré pour minimiser les éclaboussures et faciliter l'écoulement de l'eau à l'arrière du véhicule. Dans cet art antérieur, contrairement à la présente invention, le but n'est pas de freiner le véhicule.

Le brevet US 3,167,024 décrit un circuit de roller coaster simulant une descente en bobsleigh, comportant un bassin d'eau vers la fin du parcours, avant l'entrée en gare. Les rails traversent le bassin, sous la surface de l'eau. La partie inférieure des véhicules, carénée, pénètre dans l'eau lors de la traversée du bassin, ce qui les freine tout en soulevant une gerbe d'eau. Cette installation présente plusieurs inconvénients: au moment de l'entrée du véhicule dans l'eau, un choc est quasi inévitable; à ce moment et pendant la traversée du bassin, la résistance de l'eau exerce une force ayant une importante composante verticale sur le véhicule, qui tend à séparer celui-ci des rails et qui doit être compensée par les pièces du train de roulement. Les contraintes mécaniques que subit le train de roulement sont donc particulièrement importantes avec ce système. Le contact avec l'eau tend à enlever de la matière de graissage des roulements. Les chocs répétés, ainsi que la corrosion due au passage fréquent eau-air, tend à provoquer une usure rapide du train de roulement. De plus, au moindre défaut d'étanchéité de la coque, les passagers du véhicule risquent d'être trempés.

Le brevet CH 689857 du déposant et la demande DE 10160039 décrivent également des circuits qui passent dans une pièce d'eau, celle-ci étant agencée de façon à donner une impression d'amerrissage aux passagers. Le niveau du tronçon de la voie ferrée passant dans la pièce d'eau se trouve au-dessous du niveau d'eau. Du fait que les véhicules sont conçus pour rester solidaires des rails, les trains de roulement et les bas de caisse de ces véhicules se trouvent alors partiellement immergés dans l'eau, ce qui provoque d'une part un freinage et d'autre part des gerbes d'eau. Ce tronçon est suivi par une petite rampe pour amener le train de véhicules au niveau de la gare. Ces circuits posent également les problèmes liés à une conception spécifique de véhicules devant résister à un très grand nombre d'entrées en contact avec l'eau du bassin.

La demande de brevet européen no EP-A-1524016 du déposant, qui est comprise dans l'état de l'art au sens de l'article 54(3)CBE, décrit une installation du type défini d'entrée, avec un véhicule de roller coaster muni d'au moins un frein constitué d'une tuyère courbée de telle sorte que l'admission de fluide et l'éjection de fluide sont orientées dans des directions différentes. La tuyère est agencée de sorte que l'ouverture d'admission de fluide est orientée vers l'avant du véhicule, et de telle sorte que l'ouverture d'admission pénètre dans l'eau d'une pièce d'eau agencée à côté d'une portion de la voie de guidage du circuit.

Lorsque l'ouverture d'admission de la tuyère pénètre dans l'eau, une partie de l'énergie cinétique du véhicule est transférée à la masse d'eau qui se trouve momentanément à l'intérieur de la tuyère, freinant ainsi le véhicule. A la sortie de la tuyère, une gerbe d'eau est envoyée dans la direction de l'axe de l'ouverture d'éjection, produisant un effet visuel similaire à celui du jet d'une lance d'incendie. On a pu obtenir ainsi, par exemple, avec un véhicule lancé à une vitesse de 20 m/s, une gerbe s'élevant à environ 16-18 m, et retombant à une distance de l'ordre de 40 à 50 m, l'axe de l'ouverture d'éjection de la tuyère formant un angle de 70° avec l'horizontale. En variant le diamètre de la tuyère et l'angle de cet axe, on peut obtenir des jets de diamètres, de directions et de hauteurs variables. Toutefois, la forme et, partant, l'aspect esthétique de ces jets ne peuvent pas beaucoup varier.

Un but de la présente invention est de pouvoir générer des gerbes d'eau de formes variées sur un tronçon d'un circuit pour bénéficier de l'effet esthétique et de l'effet psychologique de surprise qu'elles provoquent chez les passagers, tout en étant en mesure de les ajuster en hauteur et/ou en intensité, de telle sorte que les passagers ne soient pas mouillés, ou au contraire soient touchés par des gouttes d'eau, si ceci est souhaité.

Un autre but de l'invention est d'obtenir le freinage du véhicule ainsi que ces gerbes d'eau sans devoir employer de véhicules à coques étanches enveloppantes, alors que la tendance dans la construction de roller coasters est aux véhicules ouverts de tous cotés, qui augmentent les sensations des passagers.

Ces buts sont atteints en particulier grâce à un frein hydrodynamique pour un véhicule d'installation de roller coaster selon la revendication 1.

Le circuit de roller coaster sur lequel circule le véhicule comprend une pièce d'eau agencée de telle sorte que lorsque le véhicule la traverse ou la longe, la dérive du frein pénètre dans l'eau, mais que ni les rails ni les autres parties du véhicule ne soient en contact avec l'eau.

La dérive est agencée de façon à produire des gerbes d'eau montantes, que ce soit sous forme de rideaux liquides ou de jets plus concentrés.

Cet effet est non seulement esthétique, mais, par effet de réaction mécanique, tend à plaquer le véhicule contre le rail au lieu de le soulever, comme c'était le cas dans les dispositifs de l'art antérieur.

La portion concernée de la voie de guidage peut être agencée en suspension au-dessus de la surface de l'eau de la pièce d'eau. Cette portion de la voie de guidage peut également être agencée sur un môle divisant la pièce d'eau ou sur des piliers placés dans la pièce d'eau.

La dérive du frein hydrodynamique peut être fixée au châssis du véhicule au moyen d'un ensemble de barres et/ou de tringles qui l'en rendent solidaire, tout en permettant de régler l'espacement latéral et vertical de la dérive par rapport au train de roulement du véhicule.

Au lieu d'un ensemble de barres d'espacement, ou en plus d'un tel ensemble de barres, les moyens de fixation de la dérive au châssis du véhicule peuvent comprendre une plaque ou une pièce de carrosserie sous forme d'une aile capable de former écran entre les passagers du véhicule et des projections de liquide, lorsque le véhicule longe une pièce d'eau et que la dérive entre en action. Les moyens de fixation, sous forme de barres et/ou de plaques peuvent de plus contribuer à rigidifier la structure de la dérive, et à en constituer un longeron.

De préférence, le véhicule ou le groupe de véhicules constituant un train porte respectivement à gauche et à droite de son train de roulement une paire ou une pluralité de freins hydrodynamiques agencés de sorte à venir de part et d'autre et en dessous de la voie de guidage, et de telle sorte que la force de freinage résultante à gauche soit sensiblement égale à la force de freinage résultante à droite.

Les formes, les directions, voire même le nombre de gerbes d'eau soulevées simultanément à gauche et à droite du véhicule ou du train de véhicules ne sont pas nécessairement identiques. Toutefois, pour minimiser les contraintes mécaniques en rotation ou en torsion que subit le véhicule, il est préférable que les forces de freinage à gauche et à droite soient sensiblement équilibrées pendant le passage du véhicule dans la portion de la voie de guidage où le freinage hydrodynamique se produit.

Pour simplifier la conception mécanique, le véhicule de circuit de roller coaster selon l'invention peut porter une ou plusieurs paire(s) de tels freins, agencées latéralement et symétriquement par rapport au plan de symétrie longitudinal du véhicule. L'agencement symétrique par paires permet d'équilibrer aisément les forces de freinage lors de l'interaction de chaque dérive avec des masses d'eau situées de part et d'autre des rails où circule le véhicule.

Selon un mode d'exécution préféré de l'invention, l'ensemble des pièces constituant le train de roulement du véhicule, la face inférieure du châssis du véhicule, les pièces d'espacement vertical et les dérives constituant les freins hydrodynamiques de chaque côté d'un véhicule forment un U ou un V renversé, ouvert vers le bas, qui délimite un espace libre et en quelque sorte coiffe la voie de guidage. Avec cet agencement, les dérives des freins selon l'invention peuvent tremper dans un bassin situé en dessous d'une voie de guidage suspendue. Avec cet agencement, les dérives peuvent également passer de part et d'autre d'un môle ou de piliers portant la voie de guidage et situés à l'intérieur d'une pièce d'eau, le système de rails du circuit restant au sec, alors que les dérives trempent dans l'eau.

D'autres caractéristiques et avantages de l'invention apparaîtront pour l'homme du métier de la description détaillée de modes d'exécution préférés de l'invention, en se référant aux figures du dessin, dans lequel
- les figures 1A, 1B et 1C montrent une vue en perspective, une vue latérale et une vue de face en élévation d'une dérive d'un frein selon l'invention,
- les figures 2A, 2B et 2C montrent les mêmes vues d'un deuxième mode d'exécution de frein,
- les figures 3A, 3B et 3C montrent les mêmes vues d'un troisième mode d'exécution de frein,
- la figure 4 est une coupe transversale d'un véhicule sur un premier mode d'exécution d'une portion de voie de guidage, muni de freins selon la figure 2A,
- la figure 5 est une coupe transversale d'un véhicule sur un deuxième mode d'exécution de la voie de guidage, muni de freins selon la figure 2A,
- les figures 6A et 6B sont des vues respectivement latérale et de dessus d'un train de véhicules muni d'une paire de freins selon la figure 3A, et
- les figures 7A et 7B sont des vues respectivement latérale et de dessus d'un train de véhicules muni d'une paire de freins selon la figure 2A.

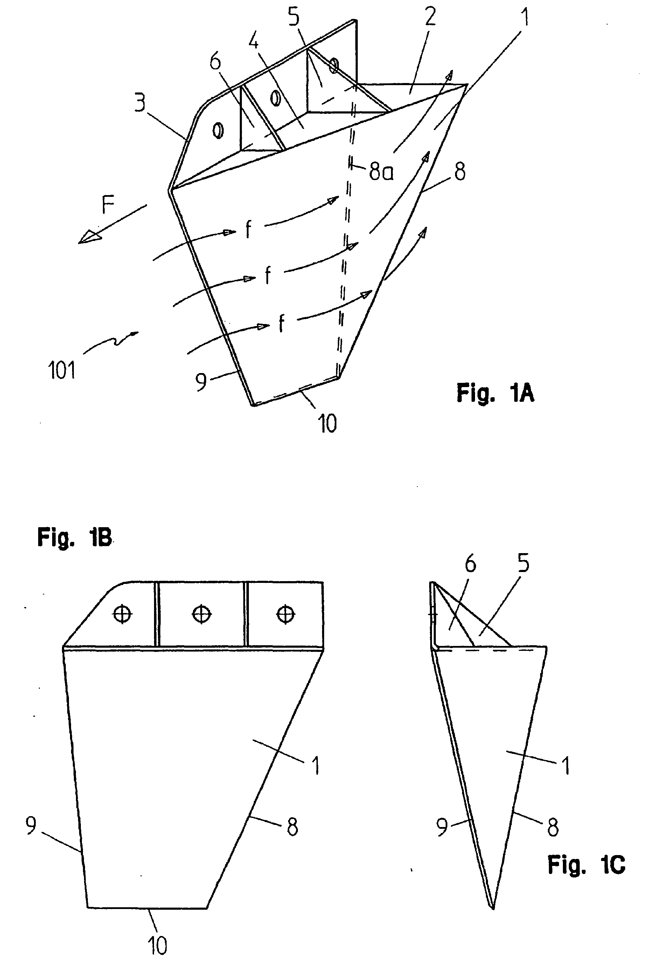

Les figures 1A, 1B et 1C montrent un premier mode d'exécution d'une dérive 101 de frein hydrodynamique selon l'invention. La dérive est constituée d'un assemblage d'une plaque trapézoïdale 1 formant le flanc extérieur de la dérive, d'une plaque triangulaire 2 formant la face arrière de la dérive et d'une troisième plaque 3 se prolongeant vers le haut par une portion percée de trois trous destinés à recevoir des boulons en vue de la fixation au châssis d'un véhicule via des pièces d'espacement. Les plaques 1 et 3 sont jointes par leurs arêtes situées à gauche sur les figures, formant le bord d'attaque 9 de la dérive 101, et par leurs arêtes inférieures, formant le bord inférieur 10 de la dérive. La plaque triangulaire 2 joint les deux autres arêtes latérales des plaques 1 et 3, formant deux bords de fuite 8, 8a. La plaque 1 n'est donc pas parfaitement plane mais présente une surface extérieure concave. La dérive 101 est réalisée sous forme d'un caisson fermé au moyen d'une plaque supérieure 4, et présente deux pièces de renfort 5 et 6, comme le montrent les figures. La flèche F symbolise la trajectoire de la dérive 101 et les flèches f symbolisent le déplacement relatif d'une masse d'eau le long du flanc extérieur de la dérive formé par la plaque 1. Selon des variantes non représentées de ce mode d'exécution, la dérive 101 peut être agencée de façon que la plaque 1 présente une surface plane ou convexe.

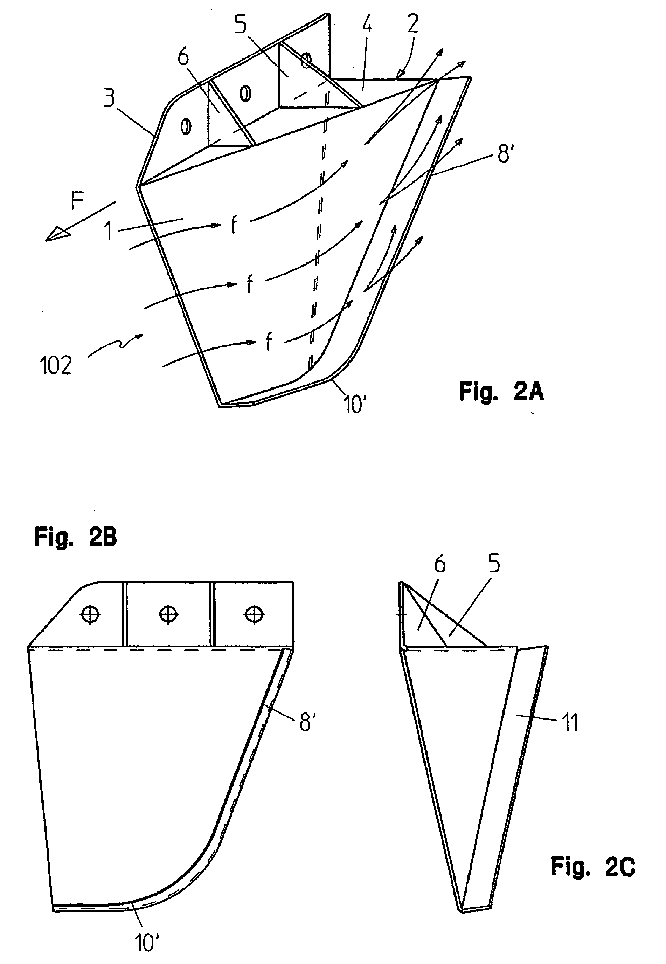

Les figures 2A, 2B et 2C montrent un deuxième mode d'exécution de dérive 102 de frein hydrodynamique selon l'invention. Ce mode d'exécution utilise la même structure que celle montrée aux figures 1A, 1B et 1C, dont les éléments sont désignés par les mêmes numéros de référence. Elle est complétée par une plaque déflectrice 11 agencée le long de l'arête inférieure et de l'arête arrière de la plaque 1. La plaque déflectrice 11 peut être venue d'une pièce avec la plaque arrière 2. Elle dévie fortement la masse de liquide s'écoulant le long de la plaque 1 et constitue le bord inférieur 10' et le bord de fuite 8' de la dérive.

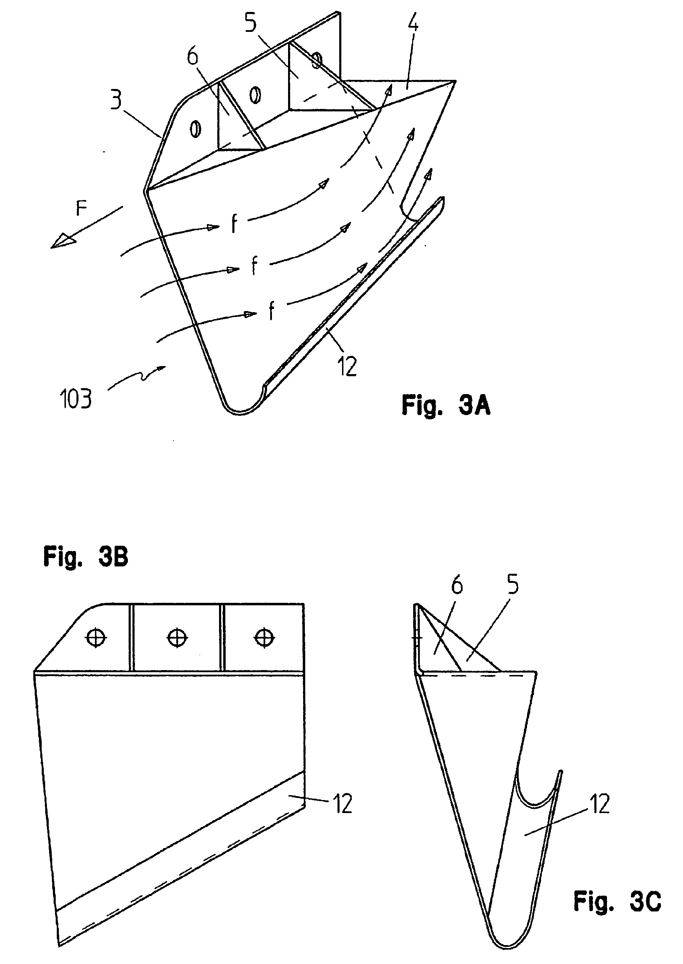

Les figures 3A, 3B et 3C montrent un troisième mode d'exécution de dérive 103 de frein hydrodynamique selon l'invention. Cette dérive 103 utilise la même structure de base que le premier et le deuxième mode d'exécution. Comme le montre la figure 3B, le bord inférieur des plaques 1 et 3 n'est pas parallèle au bord supérieur, mais incliné par rapport à celui-ci. Il se prolonge par une gouttière 12 agencée comme le montrent les figures, qui peut être réalisée simplement par un prolongement recourbé de la plaque 1 ou de la plaque 3.

Les dérives 101, 102 et 103 peuvent être réalisées au moyen de plaques d'acier soudées et/ou pliées.

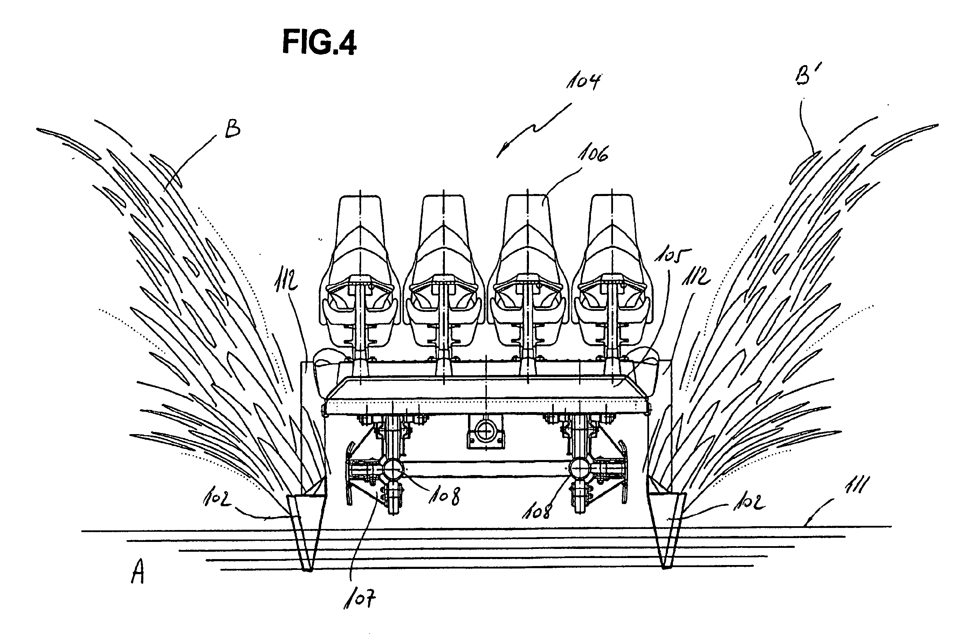

La figure 4 montre l'agencement d'une portion d'installation avec un véhicule de circuit de roller coaster. Le véhicule 104 comporte un châssis 105 formant une plateforme, sur laquelle est montée une rangée de quatre sièges 106. Sous le châssis est fixé un train de roulement 107. Le train de roulement coopère avec des rails tubulaires 108 pour empêcher tout jeu vertical et latéral. Ce type de train de roulement et de rails est connu dans l'état de la technique. La portion de la voie de guidage 108 passant par la pièce d'eau A est montée en suspension au-dessus de celle-ci, le niveau de l'eau étant indiqué par 111. Les moyens permettant de monter un tronçon d'une paire de rails en suspension sont en soi connus et n'ont pas besoin d'être décrits ici. Le châssis 105 porte de part et d'autre deux plaques de fixation 112 s'étendant vers le bas. Au bas de ces plaques de fixation est fixée une paire de dérives 102 identiques à celles visibles en particulier sur la figure 2C. Les dimensions des plaques de fixation 112 sont choisies de telle sorte que les dérives 102 viennent en dessous du niveau 111 de la surface de l'eau sur la moitié environ de leur hauteur. Les gerbes d'eau soulevées sont symbolisées par B, B' sur la figure. Leur forme est celle d'un mur d'eau parallèle à la direction de l'axe de la voie; la forme en coupe transversale est semblable à celle générée par un monoski nautique en courbe.

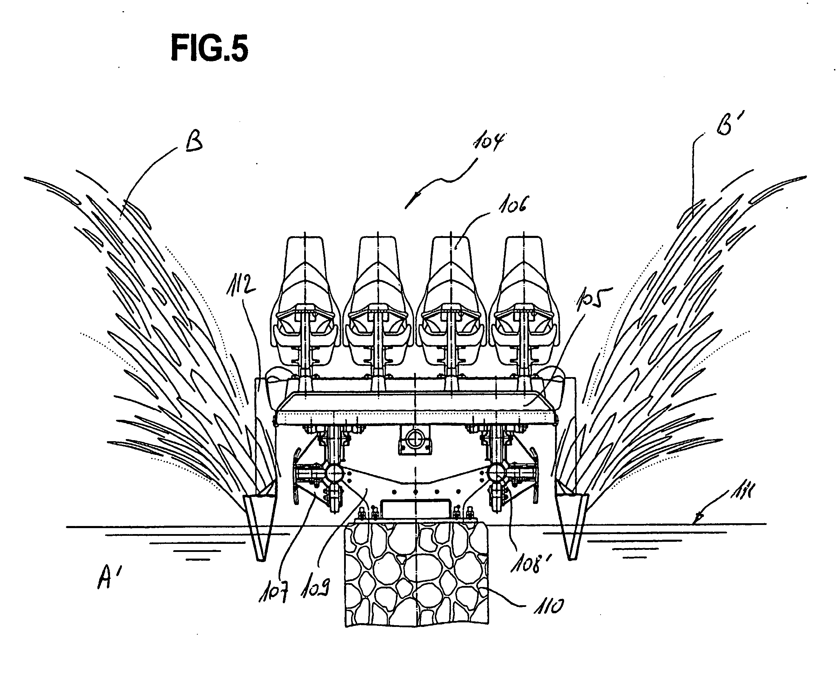

La figure 5 montre un deuxième mode d'exécution de l'installation, dans lequel les rails 108' sont portés par une série de traverses 109, elles-mêmes montées sur un môle ou sur des piliers 110 par des moyens en soi connus. Comme le montre la figure 5, le môle ou les piliers situés dans la pièce d'eau A' peuvent être réalisés en maçonnerie ou par blocs préfabriqués. Pour le surplus, le mode d'exécution montré par la figure 5 est identique à celui montré par la figure 4. Les plaques d'espacement 112 sont suffisamment longues pour que les dérives 102 plongent dans l'eau, et elles protègent les passagers des éclaboussures.

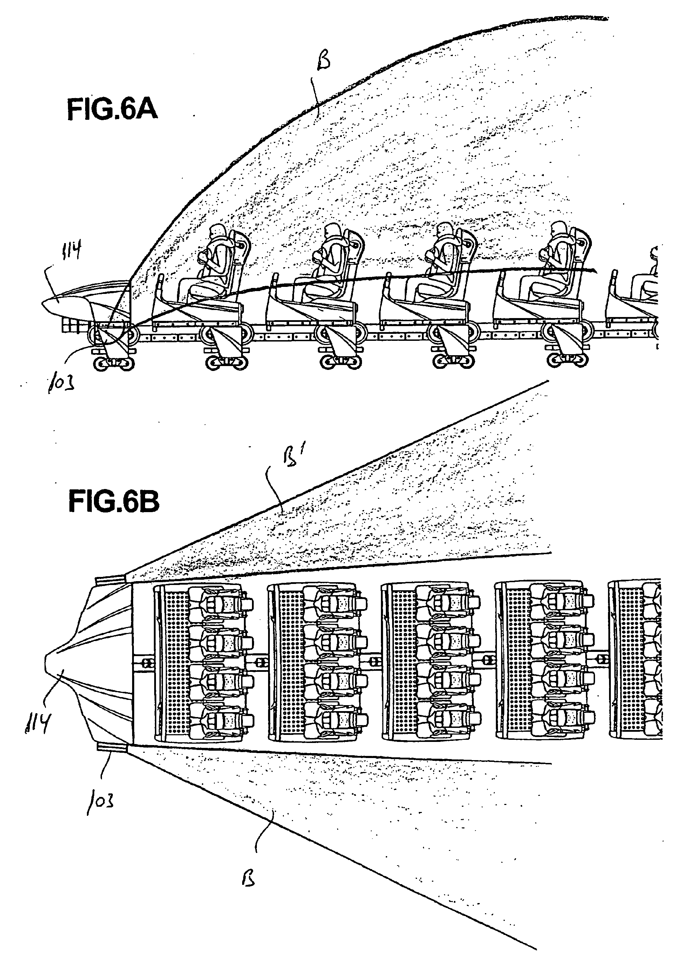

Les figures 6A et 6B montrent un train de véhicules 113 dont le carénage frontal 114 porte une paire de freins munis de dérives 103 du type montré par les figures 3A, 3B et 3C. Les deux dérives 103 sont montées de telle sorte que leurs gouttières convergent légèrement vers l'avant. Il en résulte une paire de gerbes divergentes vers l'arrière, en forme de lames.

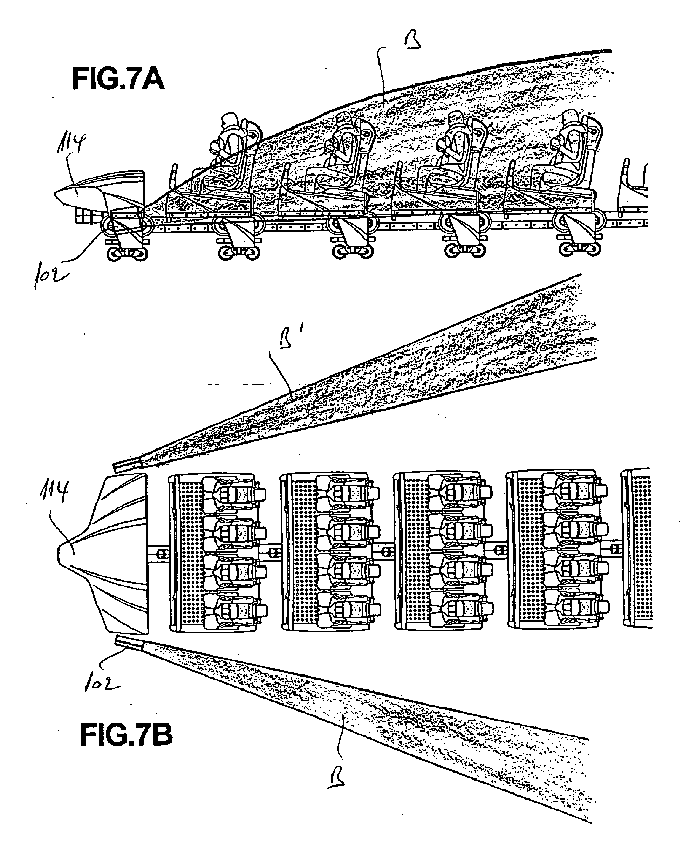

De même, les figures 7A et 7B montrent un train de véhicules 113' dont le carénage frontal 114' porte une paire de freins munis de dérives 102 du type montré par les figures 2A, 2B et 2C.

L'homme du métier est en mesure d'obtenir des effets de gerbes d'eau extrêmement variables en variant les formes et l'agencement des dérives de frein selon l'invention, en particulier la conformation des lames déflectrices, dont deux exemples ont été décrits ci-dessus, sans sortir du cadre de l'invention définie par les revendications.

## Revendications

1. Frein hydrodynamique pour un véhicule d'installation de roller coaster, **caractérisé en ce qu'**il comprend un empennage (101, 102, 103) et des moyens d'espacement et de fixation (112) pour fixer l'empennage au véhicule, ledit empennage étant agencé de telle sorte à pénétrer dans l'eau d'une pièce d'eau au passage du véhicule dans une portion de voie de guidage de l'installation de roller coaster et à soulever une gerbe d'eau (B, B'), sous réserve que l'expression "frein hydrodynamique comprenant un empennage" exclut un frein hydrodynamique comprenant une tuyère agencée sur le véhicule de telle sorte qu'une admission de fluide et une éjection de fluide soient orientées dans des directions différentes.

2. Frein selon la revendication 1, **caractérisé en ce que** ledit empennage comprend une dérive (101, 102, 103).

3. Frein selon l'une des revendications 1 ou 2, **caractérisé en ce que** ladite dérive comprend un longeron (3) formant le flanc intérieur de ladite dérive et s'étendant vers le haut pour permettre la fixation de l'empennage au châssis ou à la coque du véhicule.

4. Frein selon l'une quelconque des revendications précédentes, **caractérisé en ce que** ladite dérive (101, 102, 103) présente en section horizontale sensiblement la forme d'un triangle dont un sommet constitue le bord d'attaque (9) de la dérive.

5. Frein selon l'une quelconque des revendications précédentes, **caractérisé en ce que** ladite dérive (101, 102) présente en section selon un plan perpendiculaire à l'axe de la voie de guidage sensiblement la forme d'un triangle dont un sommet forme le bord inférieur (10) de la dérive.

6. Frein selon l'une quelconque des revendications précédentes, **caractérisé en ce que** le bord inférieur (10') et/ou le bord de fuite (8') de la dérive porte(nt) une plaque déflectrice (11).

7. Frein selon l'une quelconque des revendications précédentes, **caractérisé en ce que** le bord inférieur et/ou le bord de fuite de la dérive (103) porte(nt) une plaque déflectrice en forme de gouttière (12).

8. Véhicule (104) d'installation de roller coaster muni d'au moins un frein hydrodynamique (101, 102, 103) selon l'une quelconque des revendications 1 à 7.

9. Véhicule (104) selon la revendication 8, **caractérisé en ce qu'**il est muni d'au moins une paire de freins hydrodynamiques (101, 102, 103) selon l'une quelconque des revendications 1 à 7 disposés de part et d'autre du châssis (105) du véhicule.

10. Installation de roller coaster comprenant une voie de guidage, au moins un véhicule (104) selon la revendication 9. guidé par la voie de guidage et au moins une pièce d'eau (A, A') agencée sous ou à côté d'une portion (108, 108') de la voie de guidage.

11. Installation selon la revendication 10, **caractérisée en ce que** la voie de guidage, le véhicule et la pièce d'eau sont agencés de telle sorte que les freins hydrodynamiques soient les seules parties du véhicule à pénétrer dans l'eau.

12. Installation selon la revendication 10 ou 11, **caractérisée en ce que** ladite portion de la voie de guidage (108) est agencée en suspension au-dessus de la surface de l'eau de la pièce d'eau (A).

13. Installation selon la revendication 10 ou 11, **caractérisée en ce que** ladite portion de la voie de guidage (108') est agencée sur un môle ou des piliers (110) placés dans la pièce d'eau (A').

14. Installation selon la revendication 12 ou 13, **caractérisée en ce que** ladite portion de la voie de guidage est agencée en fin de parcours du véhicule, avant l'entrée de la gare d'arrivée de l'installation.

15. Installation selon l'une quelconque des revendications 10 à 14, **caractérisée en ce que** le véhicule (104) porte respectivement à gauche et à droite de son train de roulement une pluralité de freins hydrodynamiques (102, 103) agencés de sorte à venir de part et d'autre et en dessous de la voie de guidage (108, 108'), et de telle sorte que la force de freinage résultante à gauche soit sensiblement égale à la force de freinage résultante à droite pendant le passage du véhicule dans ladite portion de la voie de guidage.

16. Installation selon la revendication 15, **caractérisée en ce que** les freins hydrodynamiques (101, 102, 103) sont agencés latéralement par paires symétriques par rapport au plan de symétrie longitudinale du véhicule.

## Claims

1. A hydrodynamic brake for a roller coaster installation vehicle, **characterized in that** it comprises a fin (101, 102, 103) and spacing and fixing means (112) for fixing the fin to the vehicle, the said fin being arranged so as to penetrate the water in a stretch of water when the vehicle passes through a portion of the roller coaster installation guide track and so as to raise a water spray (B, B'), on condition that the expression "hydrodynamic brake comprising a fin" exclude a hydrodynamic brake comprising a nozzle arranged on the vehicle in order that a fluid intake and a fluid ejection are oriented in different directions.

2. The brake according to claim 1, **characterised in that** the said fin comprises a keel (101, 102, 103).

3. The brake according to one of claims 1 or 2, **characterised in that** the said keel comprises a strut (3) forming the internal flank of the said keel and extending upwards to permit the fixing of the fin to the chassis or shell of the vehicle.

4. The brake according to any one of the preceding claims, **characterised in that** the said keel (101, 102, 103) has in horizontal section approximately in the form of a triangle, a vertex of which constitutes the leading edge (9) of the keel.

5. The brake according to any one of the preceding claims, **characterised in that** the said keel (101, 102) has, in cross section along a plane perpendicular to the axis of the guide track, approximately the form of a triangle, a vertex of which forms the bottom edge (10) of the keel.

6. The brake according to any one of the preceding claims, **characterised in that** the bottom edge (10') and/or the trailing edge (8') of the keel carry a deflector plate (11).

7. The brake according to any one of the preceding claims, **characterised in that** the bottom edge and/or the trailing edge of the keel (103) carry a deflector plate in the form of a channel (12).

8. A roller coaster installation vehicle (104) provided with at least one hydrodynamic brake (101, 102, 103) according to any one of claims 1 to 7.

9. The roller coaster installation vehicle (104) according to claim 8, **characterized in that** it is provided with at least a pair of hydrodynamic brakes (101, 102, 103) according to any one of the claims 1 to 7 arranged on either side of the chassis (105) of the vehicle.

10. The roller coaster installation comprising a guide track, at least one vehicle (104) according to claim 9 guided by the guide track and at least one stretch of water (A, A') arranged under or alongside a portion (108, 108') of the guide track.

11. The installation according to claim 10, **characterised in that** the guide track, the vehicle and the stretch of water are arranged so that the hydrodynamic brake is the only part of the vehicle to enter the water.

12. The installation according to claim 10 or 11, **characterised in that** the said portion of the guide track (108) is arranged in suspension above the surface of the water in the stretch of water (A).

13. The installation according to claim 10 or 11, **characterised in that** the said portion of the guide track (108') is arranged on a mole or pillars (110) placed in the stretch of water (A').

14. The installation according to claim 12 or 13, **characterised in that** the said portion of the guide track is arranged at the end of travel of the vehicle, before entering the arrival station of the installation.

15. The installation according to any one of the claims 10 to 14, **characterised in that** the vehicle (104) carries, respectively to the left and right of its running carriage, a plurality of hydrodynamic brakes (102, 103) arranged so as to come on each side of and below the guide track (108, 108'), and so that the resulting braking force on the left is substantially equal to the resulting braking force on the right, whilst the vehicle is passing through the said portion of the guide track.

16. The installation according to claim 15, **characterised in that** the hydrodynamic brakes (101, 102, 103) are arranged laterally in symmetrical pairs with respect to the longitudinal plane of symmetry of the vehicle.

## Patentansprüche

1. Hydrodynamische Bremse für ein Fahrzeug einer Achterbahnanlage, **dadurch gekennzeichnet, dass** sie ein Leitwerk (101, 102, 103) und Abstands- und Befestigungsmittel (112) umfasst, um das Leitwerk am Fahrzeug zu befestigen, wobei das Leitwerk derart ausgestaltet ist, dass es in das Wasser eines Wasserteichs eindringt, wenn das Fahrzeug einen Abschnitt der Führungsbahn der Achterbahnanlage passiert, und dass es eine Wasserfontäne (B, B') erzeugt, unter dem Vorbehalt, dass der Ausdruck "hydrodynamische Bremse, umfassend ein Leitwerk" eine hydrodynamische Bremse ausschließt, die eine Düse umfasst, die derart am Fahrzeug vorgesehen ist, dass ein Fluideinlass und ein Fluidausstoß in unterschiedliche Richtungen gerichtet sind.

2. Bremse nach Anspruch 1, **dadurch gekennzeichnet, dass** das Leitwerk eine Kielflosse (101, 102, 103) umfasst.

3. Bremse nach einem der Ansprüche 1 oder 2, **dadurch gekennzeichnet, dass** die Kielflosse einen Längsträger (3) umfasst, der die Innenflanke der Kielflosse bildet und sich nach oben erstreckt, um die Befestigung des Leitwerks am Rahmen oder am Körper des Fahrzeugs zu ermöglichen.

4. Bremse nach einem der vorhergehenden Ansprüche, **dadurch gekennzeichnet, dass** die Kielflosse (101, 102, 103) im horizontalen Schnitt im Wesentlichen die Form eines Dreiecks aufweist, dessen eine Spitze die Vorderkante (9) der Kielflosse bildet.

5. Bremse nach einem der vorhergehenden Ansprüche, **dadurch gekennzeichnet, dass** die Kielflosse (101, 102, 103) im Schnitt in einer Ebene, die senkrecht zur Achse der Führungsbahn ist, im Wesentlichen die Form eines Dreiecks aufweist, dessen eine Spitze die Unterkante (10) der Kielflosse bildet.

6. Bremse nach einem der vorhergehenden Ansprüche, **dadurch gekennzeichnet, dass** die Unterkante (10') und/oder die Hinterkante (8') der Kielflosse ein Ablenkblech (11) trägt (tragen).

7. Bremse nach einem der vorhergehenden Ansprüche, **dadurch gekennzeichnet, dass** die Unterkante und/oder die Hinterkante der Kielflosse (103) ein Ablenkblech in Form einer Rinne (12) trägt (tragen).

8. Fahrzeug (104) für eine Achterbahnanlage, das mit mindestens einer hydrodynamischen Bremse (101, 102, 103) nach einem der Ansprüche 1 bis 7 versehen ist.

9. Fahrzeug (104) nach Anspruch 8, **dadurch gekennzeichnet, dass** es mit mindestens einem Paar hydrodynamischer Bremsen (101, 102, 103) nach einem der Ansprüche 1 bis 7 versehen ist, die zu beiden Seiten des Rahmens (105) des Fahrzeugs angeordnet sind.

10. Achterbahnanlage, umfassend eine Führungsbahn, mindestens ein Fahrzeug (104) nach Anspruch 9, das durch die Führungsbahn geführt wird, und mindestens einen Wasserteich (A, A'), der unter oder neben einem Abschnitt (108, 108') der Führungsbahn angeordnet ist.

11. Anlage nach Anspruch 10, **dadurch gekennzeichnet, dass** die Führungsbahn, das Fahrzeug und der Wasserteich derart angeordnet sind, dass die hydrodynamischen Bremsen die einzigen Teile des Fahrzeugs sind, die in das Wasser eindringen.

12. Anlage nach Anspruch 10 oder 11, **dadurch gekennzeichnet, dass** der Führungsbahnabschnitt (108) so angeordnet ist, dass er über der Wasseroberfläche des Wasserteichs (A) aufgehängt ist.

13. Anlage nach Anspruch 10 oder 11, **dadurch gekennzeichnet, dass** der Führungsbahnabschnitt (108') auf einem Damm oder auf Säulen (110) angeordnet ist, die sich im Wasserteich (A') befinden.

14. Anlage nach Anspruch 12 oder 13, **dadurch gekennzeichnet, dass** der Führungsbahnabschnitt am Ende der Laufstrecke des Fahrzeugs vor dem Eingang der Zielstation der Anlage angeordnet ist.

15. Anlage nach einem der Ansprüche 10 bis 14, **dadurch gekennzeichnet, dass** das Fahrzeug (104) links bzw. rechts von seinem Fahrwerk eine Vielzahl von hydrodynamischen Bremsen (102, 103) trägt, die derart angeordnet sind, dass sie sich zu beiden Seiten und unter der Führungsbahn (108, 108') befinden und dass die resultierende Bremskraft links im Wesentlichen gleich der resultierenden Bremskraft rechts ist, während das Fahrzeugs den Führungsbahnabschnitt passiert.

16. Anlage nach Anspruch 15, **dadurch gekennzeichnet, dass** die hydrodynamischen Bremsen (101, 102, 103) seitlich in symmetrischen Paaren in Bezug auf die Längssymmetrieebene des Fahrzeugs angeordnet sind.
